# EUROPEAN PATENT SPECIFICATION

(11) **EP 0 539 234 B1**
(45) Date of publication and mention of the grant of the patent: **12.03.1997**
(21) Application number: 92309760.4
(22) Date of filing: 23.10.1992
(51) Int. Cl.: C08L 83/06, C08L 83/08

(54) **Curable silicon composition**
Härtbare Siloxanzusammensetzung
Composition d'organopolysiloxane durcissable

(30) Priority: 23.10.1991 JP 337494/91
(43) Date of publication of application: 28.04.1993
(73) Proprietor: THREE BOND CO., LTD., Hachioji-shi Tokyo 193 (JP)
(72) Inventor: Hanazuka, Yasuo, Hachioji-shi, Tokyo (JP); Usami, Ikuzo, Tsukui-gun, Kanagawa-ken (JP); Chiba, Kazuyuki, Sagamihara-shi, Kanagawa-ken (JP); Mizutani, Noriko, Hachioji-shi, Tokyo (JP)
(74) Representative: Smaggasgale, Gillian Helen

(56) References cited:
- EP-A- 0 174 647
- EP-A- 0 200 828
- EP-A- 0 492 828
- DE-A- 3 635 719
- US-A- 4 486 504

## Description

### Background of the Invention

The present invention relates to a curable silicone composition for a liquid gasket and more particularly a composition for a liquid gasket which is used as FIPG (Formed In-Place Gasket) in assembling processes of, for example automobile parts, electric and electronic parts and which increases in viscosity when irradicated with ultraviolet rays. The gasket is superior in both working efficiency and initial pressure resistance at the time of mounting (the pressure resistance is checked in the assembling process before complete curing of the liquid gasket).

In connection with using the gasket as FIPG, a method is known wherein, in a moisture-curable room temperature vulcanizable (RTV) silicone comprising a one-pack type condensation-curable composition which contains an organosiloxane as a main component, the molecular weight of a polysiloxane is made larger or the amount of an inorganic filler to be incorporated in the composition is increased to attain an increase in viscosity for obtaining a high initial pressure resistance at the time of mounting. It is also known that, in an anaerobic adhesive, partial curing is allowed to take place by the radiation of ultraviolet ray, followed by anaerobic curing (Japanese Patent Laid Open No. 104976/1983). It is also known that an ultraviolet-curing resin is allowed to cure completely at a flange interface and thereafter another flange is mounted (Japanese Patent Laid Open No. 77597/1987).

However, where the sealing material has been made high in viscosity to attain a high initial pressure resistance, a discharge pump or a dispenser of a coating machine will be overloaded, thus making it difficult to form a bead precisely and efficiently. The anaerobic adhesive disclosed in Japanese Patent Laid Open No. 104976/1983 exhibits curing difficulties, for example, it does not cure when in the form of a thick film, when protruding from a flange portion and when in flanges (plastic parts) other than metal flanges. Further, the gasket layer pre-formed at a flange interface, which is disclosed in Japanese Patent Laid Open No. 77597/1987, cannot afford a high pressure resistance unless strongly clamped because it is not bonded to another flange. However, too strong clamping may cause stress-cracking of the gasket layer.

DE-A-3635719 describe a FIPG - composition which contains: 100 parts by weight of an organopolysiloxane containing at least two silanol OH groups; 0.5 to 30 parts by weight of an organosilane compound having the formula:

RₐSi(O-C(CH₃)=CH₂)_{b}(OR)_{c};

an organopolysiloxane compound containing at least two mercapto groups in the molecule; a hardening catalyst; and 0.01 to 10 parts by weight of a photo-sensitizer.

It is the object of the present invention to overcome the above-mentioned problems of the prior art.

### Summary of the Invention

The present invention resides in a silicone composition for a liquid gasket, having two curing properties which are an ultraviolet-curing property and a moisture-curing property, and characterized by containing
(a) 5-50 wt% of a polysiloxane having at a molecular end at least one group selected from the group consisting of (meth)acryl, glycidyl and propenyloxysilyl;
(b) a polyorganosiloxane having silanol groups at both molecular ends;
(c) a polyorganosiloxane containing, on at least one molecular end; a hydrolyzable group having the structural formula -SiRₐX₃₋ₐ and the repeating unit 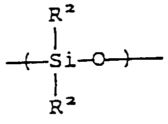 where R² are the same or different and are alkyl or aryl; R is alkyl, halogen-substituted alkyl or halogen-substituted aryl; X is a hydrolyzable group selected from the group consisting of acyloxy, alkoxy, ketoxime, amino, amido and alkenyl; and a is 0 or 1;
(d) a photopolymerization catalyst which is a radical-forming photopolymerization catalyst when component (a) is a polysiloxane having a (meth)acryl group at at least one molecular end or an onium salt photopolymerization catalyst when component (a) is a polysiloxane having a glycidyl or a propenyloxysilyl group at at least one molecular end; and
(e) a condensation catalyst.

In one preferred composition component (a) is a polysilixone having a (meth)acryl group at at least one molecular end and said component (d) is a radical forming photopolymerization catalyst selected from the group consisting of acetophenone, benzophenone, 4-hydroxydiphenyl and 4-nitroaniline.

In one alternative preferred composition component (a) is a polysiloxane having a glycidyl or a propenyloxysilyl group at at least one molecular end and said component (d) is an onium salt of an element of Group Va, VIa or VIIa of the Periodic Table of the Elements .

### Detailed Description of the Invention

In the present invention, the component (a) is a polysiloxane having a specific functional group at a molecular end which functional group possesses a polymerizing property on ultraviolet radiation. As the end functional group there is used any of the following:

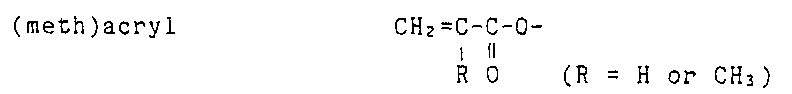

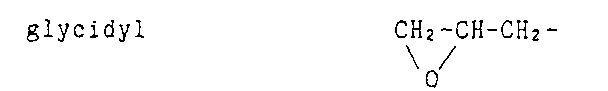

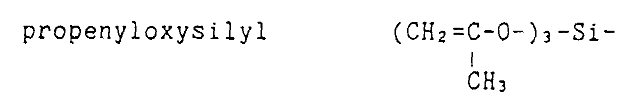

A typical example of the polysiloxane having such functional group possesses the following structural formula: 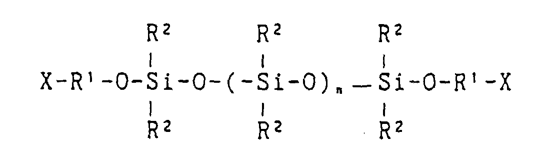 wherein R¹ is a divalent hydrocarbon group having 2 to 3 carbon atoms, preferably ethylene or propylene, each R² is selected from alkyl or aryl, preferably methyl, substituted alkyl, aryl, substituted aryl, alkoxy, or phenyl, n is an integer of 100 to 700, and X is the foregoing end group.

The component (a) can be prepared by a known method. For example, according to the technique disclosed in Japanese Patent Laid Open No. 215009/1985, a polysiloxane having functional groups at both ends thereof can be prepared by a condensation reaction of a polysiloxane having silanol end group and also having an ultraviolet-curing functional group in the molecule. Further, according to the technique disclosed in Japanese Patent Laid Open No. 319516/1989, a polysiloxane having functional groups at both ends can be prepared by a hydrosilylation reaction of a polysiloxane having vinyl end group with an organosilane having both an ultraviolet-curing functional group and hydrogen in one molecule, in the presence of a platinum catalyst. In the same publication it is also disclosed that such polysiloxane can also be prepared by a hydrosilyl reaction of a hydrogen polysiloxane and an organosilane having both vinyl group and an ultraviolet-curing functional group in one molecule.

The component (a) is used in an amount of 5-50 wt% of the total weight of the composition. If the amount thereof is less than 5%, the viscosity of the system will not exhibit a substantial rise even upon radiation of ultraviolet ray. And if it is larger than 50% exposure to ultraviolet radiation will cause a too large increase of viscosity or a too hard condition of the surface layer, resulting in breakage of the surface coating at the time of mounting a flange or failure to bond to one flange interface, thus leading to deterioration of the pressure resistance.

As the polysiloxane having silanol groups at both molecular ends, which is used as component (b) in the present invention, there usually is employed one represented by the following structural formula: 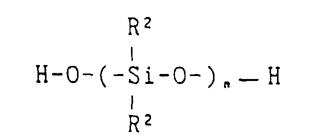 wherein each R² is selected from alkyl or aryl, preferably methyl, substituted alkyl, aryl, substituted aryl, alkoxy, or phenyl, and n may be an integer corresponding to a degree of polymerization at which this polysiloxane has a viscosity of 100 to 1,000,000 cps, preferably 1,000 to 50,000 cps, at 25°C.

The polyorganosiloxane having at least one hydrolyzable group at a molecular end, which is used as component (c) in the present invention, is represented by the following structural formula: 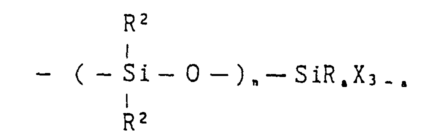 wherein each R² is selected from alkyl or aryl, R is alkyl, halogen substituted alkyl or aryl, X is a hydrolyzable group selected from the group consisting of acyloxy, alkoxy, ketoxime, amino, amido and alkenyl, and a is 0 or 1.

The component (d) used in present invention comprises a photopolymerization catalyst and a condensation catalyst. The photopolymerization catalyst is for polymerization of the component (a), while the condensation catalyst is for moisture condensation polymerization of the silanol terminated polysiloxane as component (b) and the hydrolyzable group-containing polyorganosiloxane as component (c).

As the condensation catalyst there may be used a known catalyst. Examples are metallic salts of organocarboxylic acids, organic titanic acid esters, organotitanium compounds, alkoxyaluminium compounds aminoalkyl substituted alkoxysilanes, amine compounds and salts thereof, lower fatty acid salts of alkali metals, dialkylhydoxylamines, guanidine compounds and guanidyl group-containing silanes or siloxanes. The amount of the condensation catalyst to be used may be 0.01 to 5, preferably 0.1 to 3, parts by weight based on 100 parts by weight of the silanol terminated polysiloxane which is used as component (b).

As the photopolymerization catalyst, any of radical forming catalysts and onium salts is used suitably depending to the kind of the functional group which polymerizes on exposure to ultraviolet radiation. In the case where the functional group is (meth)acryl group, there is used a known photosensitizer which forms a radical when exposed to ultraviolet radiation, namely, a radical forming photopolymerization catalyst, such as, for example, acetophenone, benzophenone, 4-hydroxydiphenyl or 4-nitroaniline. In the case of glycidyl or propenyloxysilane, there is used a known photosensitizer which forms a cation when exposed to ultraviolet radiation, namely, an onium-based photopolymerization initiator, such as, for example, onium salts of Group Va, VIa and VIIa elements in the Periodic Table. The amount of the photopolymerization catalyst to be used may be 0.1 to 5 parts by weight based on 100 parts by weight of the polysiloxane which is used as component (a).

In the composition of the present invention containing the above components as essential components there may be incorporated a suitable known filler, e.g. fumed silica, hydrophobic silica or calcium carbonate, in a predetermined amount.

In using the ultraviolet-curing composition of the present invention, it is first applied to a flange, then exposed to ultraviolet radiation to increase the viscosity, thereafter another flange is mounted thereto, followed by standing, whereby the composition is moisture-cured into a rubbery elastomer.

Thus, the silicone composition of the present invention exhibits an extreme increase in its viscosity upon exposure to ultraviolet radiation after it is applied to a flange portion, thereby affording an excellent initial pressure resistance. Since the viscosity of the polysiloxane composition in the present invention is low prior to exposure to ultraviolet radiation, the discharge pressure of a coating machine used is small, so the pump and dispenser thereof are not overloaded and it becomes possible to form a precise bead. Thus, there is attained a high working efficiency. Further, even after assembly of the flanges, the composition which has been increased in viscosity by exposure to ultraviolet radiation undergoes a polymerization reaction in the presence of moisture, thereby providing a cured, heat-resistant gasket material of a rubbery elastomer similar to the conventional gasket material of silicone rubber, which gasket material obtained is employable even under severe conditions.

### [Examples]

### Preparation 1

A polysiloxane having methacryloxypropyl groups at both ends was prepared by a condensation reaction of a methacryloxypropylaminosilane and a silanol terminated polysiloxane according to the method disclosed in Example 1 of Japanese Patent Laid Open No. 215009/1985.

### Preparation 2

A polysiloxane having propenyloxysilyl groups at both ends was prepared by a hydrosilylation reaction of a hydrogen polysiloxane and a viniltripropenyloxysilane according to the method disclosed in Example 2 of Japanese Patent Laid Open No. 319516/189.

### Preparation 3

A polysiloxane having propylene oxide groups at both ends was prepared by a condensation reaction of a propylene oxide aminosilane and a silanol terminated polysiloxane according to the same method as that disclosed in Example 1 of Japanese Patent Laid Open No. 215009/1985.

### Preparation 4

7 parts by weight of a vinyltris(methylethoxyketoxime)silane (trade name: V5050, a product of Chisso Corporation) was added, under nitrogen purge, relative to 100 parts by weight of a silanol terminated polysiloxane (molecular weight: 18,000, trade name: CPS345.5, a product of HULS Co.).

By a hydrolysis condensation reaction there was obtained a mixture of the silanol terminated polysiloxane and a polysiloxane having one or more methylethylketoxime groups as end hydrolyzable groups.

### Examples 1 - 3 and Comparative Example 1

Ultraviolet-curing silicone compositions were prepared at the composition ratios described in Table 1. The samples thus obtained were each applied to a flange which is defined in the pressure testing method for liquid gasket in JIS K 6820, then exposed to about 500 mj of ultraviolet radiation to increase the viscosity, immediately followed by mounting of another flange and measurement of both an initial pressure resistance and a pressure resistance after standing 24 hours.

As a result, it turned out that the compositions prepared according to the process of the present invention were superior in intial pressure resistance to a conventional RTV silicone (trade name: TB1217, a product of Three Bond Co.).

**Table 1**

| Component | Wt% | | | |
|---|---|---|---|---|
| | Example 1 | Example 2 | Example 3 | Comparative Example 1 |
| Methacryloxypropyl terminated polysiloxane, Preparation 1 | 30 | | | |
| Propylene oxide terminated polysiloxane, Preparation 3 | | 30 | | |
| Propenyloxysilyl terminated polysiloxane, Preparation 2 | | | 30 | |
| Mixture of Silanol terminated polysiloxane and Ketoxime terminated polysiloxane, Preparation 4 | 60 | 60 | 60 | |
| Aerosil 972 (silica powder) (Nippon Aerosil) | 4 | 4 | 4 | |
| Dibutyltin octate (condensation catalyst) | 1 | 1 | 1 | |
| Benzophenone (photopolymerization catalyst) | 1 | | | |
| Ph₂I⁺·SbF₆ (photopolymerization catalyst) | | 1 | 1 | |
| RTV Silicone(trade name: TB1217, a product of Three Bond Co.) | | | | 100 |
| Initial Pressure Resistance after ultraviolet radiation | 1.3 | 1.5 | 1.3 | 0.3 |
| Pressure Resistance after moisture-curing (after 24 hours) | 18 | 17 | 18 | 19 |

### Examples 4-6 and Comparative Examples 2, 3

Ultraviolet-curing silicone compositions were prepared at the composition ratios described in Table 2. The samples thus obtained were each applied to a flange which is defined in the pressure testing method for liquid gasket in JIS K 6820, then exposed to about 500 mj of ultraviolet radiation to increase the viscosity, and the degree of the increase in viscosity was checked by observing appearance with the naked eye. After the mounting of another flange, there were measured both an initial pressure resistance and a pressure resistance after standing 24 hours.

As a result, it turned out that an outstanding effect was exhibited when the proportion of ultraviolet-curing silicone in the composition was in the range of 5 to 50 wt%.

**Table 2**

| Component | Comparative Example 2 | Example 4 | Example 5 | Example 6 | Comparative Example 3 |
|---|---|---|---|---|---|
| Methacryloxypropyl terminated polysiloxane, Preparation 1 | 3 | 5 | 30 | 50 | 60 |
| Mixture of Silanol terminated polysiloxane and Ketoxime terminated polysiloxane, Preparation 4 | 91 | 89 | 64 | 44 | 34 |
| Aerosil 972 (silica powder) (Nippon Aerosil) | 4 | 4 | 4 | 4 | 4 |
| Dibutyltin octate (condensation catalyst) | 1 | 1 | 1 | 0.5 | 0.5 |
| Benzophenone (photopolymerization catalyst) | 1 | 1 | 1 | 1.5 | 1.5 |
| State after Ultraviolet Radiation | no increase in viscosity | slight increase in viscosity, film is present | increase in viscosity | great increase in viscosity | *1 cured |
| Initial Pressure Resistance after ultraviolet radiation | 0.3 | 0.7 | 1.3 | 3.7 | 0.3 |
| Pressure Resistance after moisture-curing (after 24 hours) | 18 | 18 | 18 | 12 | 0.6 |
| Overall Evaluation | × | ○ | ○ | ○ | × |

| | | | | | |
|---|---|---|---|---|---|
| *1) "Cured" indicates a nearly completely solidified state as a result of ultraviolet radiation. | | | | | |

### Evaluation Test

Samples were each applied to a 25 mm wide steel plate or polyacetal plate and about 3,000 mj of ultraviolet ray was radiated. Then, another steel-plate or polyacetal plate was mounted to the said steel or polyacetal plate through a spacer having a predetermined thickness to obtain a test piece having a predetermined clearance and with the sample present therein. After standing 24 hours at room temperature, the test piece was peeled off and the curing property of the sample present inside was checked with the naked eye. The results obtained are as shown in Table 3.

**Table 3**

| Film curing property on polyacetal resin plate and steel plate | | | | |
|---|---|---|---|---|
| | Methacryloxypropenyl terminated polysiloxane | | Ultraviolet-curing anaerobic gasket | |
| Film Thickness (mm) | Example 1 | | Comparative Example 4 | |
| | Polyacetal | Steel Plate | Polyacetal | Steel Plate |
| 0.3 | cured | cured | uncured | cured |
| 0.3 | cured | cured | uncured | cured |
| 0.5 | cured | cured | uncured | uncured |
| 1.0 | cured | cured | uncured | uncured |

### [Effects of the Invention]

The ultraviolet-curing silicone composition of the present invention exhibits the following excellent effects.
① Since the composition when applied is low in viscosity, the application thereof can be effected even if the pump pressure of a coating machine is small.
② Upon exposure to ultraviolet ray of the composition to increase its viscosity, there is obtained an initial pressure resistance.
   Therefore, it is possible to conduct a pressure test immediately after the mounting of another flange.
③ At the time of mounting another flange, the composition has an increased viscosity but is uncured. It bonds to a pair of flanges and cures, thus affording a high pressure resistance.
④ Since the composition moisture-cures between the flange faces, it can cure completely even when the gasket layer is thick, or at a protruded portion of flange, or even between plastic or coated flanges.

## Claims

1. A silicone composition for a liquid gasket, which is both ultraviolet-curable and moisture-curable, comprising:
(a) 5% to 50% by weight of a polysiloxane containing, on at least one molecular end, a radical selected from the group consisting of (meth)acryl, glycidyl and propenyloxysilyl;
(b) a polyorganosiloxane having silanol groups at both molecular ends;
(c) a polyorganosiloxane containing, on at least one molecular end, a hydrolyzable group having the structural formula -SiRₐX₃₋ₐ and the repeating unit 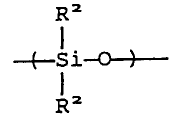 where R² are the same or different and are alkyl or aryl; R is alkyl, halogen-substituted alkyl or halogen-substituted aryl; X is a hydrolyzable group selected from the group consisting of acyloxy, alkoxy, ketoxime, amino, amido and alkenyl; and a is 0 or 1;
(d) a photopolymerization catalyst which is a radical-forming photopolymerization catalyst when component (a) is a polysiloxane having a (meth)acryl group at at least one molecular end or an onium salt photopolymerization catalyst when component (a) is a polysiloxane having a glycidyl or a propenyloxysilyl group at at least one molecular end; and
(e) a condensation catalyst.

2. A silicone composition in accordance with Claim 1 wherein component (c) is a polyorganosiloxane having the structural formula

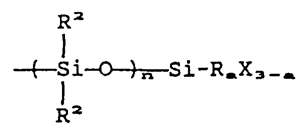

3. A silicone composition in accordance with Claims 1 or 2 wherein said component (a) is a polysiloxane having a (meth)acryl group at at least one molecular end and said component (d) is a radical forming photopolymerization catalyst selected from the group consisting of acetophenone, benzophenone, 4-hydroxydiphenyl and 4-nitroaniline.

4. A silicone composition in accordance with Claims 1 or 2 wherein said component (a) is a polysiloxane having a glycidyl or a propenyloxysilyl group at at least one molecular end and said component (d) is an onium salt of an element of Group Va, VIa or VIIa of the Periodic Table of the Elements.

5. A silicone composition in accordance with any one of Claims 1 to 4 wherein said condensation catalyst is selected from the group consisting of metallic salts of organocarboxylic acids, organic titanic acid esters, organotitanium compounds, alkoxyaluminum compounds, aminoalkyl substituted alkoxysilanes, amine compounds, salts of amine compounds, lower fatty acid salts of alkali metals, dialkylhydroxylamines, guanidine compounds, guanidyl group-containing silanes and guanidyl group-containing siloxanes.

6. A silicone composition in accordance with any one of Claims 1 to 5 wherein said condensation catalyst is empolyed in a concentration of between 0.01 and 5 parts by weight, based on 100 parts by weight of component (b).

## Patentansprüche

1. Silikonzusammensetzung für eine flüssige Dichtungsmanschette, die sowohl durch UV-Strahlen als auch durch Feuchtigkeit härtbar ist, mit folgenden Bestandteilen:
(a) 5 bis 50 Gew.-% eines Polysiloxans, das mindestens an einem Molekülende einen aus der aus Meth(acryl), Glycidyl und Propenyloxysilyl bestehenden Gruppe ausgewählten Rest aufweist;
(b) einem Polyorganosiloxan mit Silanolgruppen an beiden Molekülenden;
(c) einem Polyorganosiloxan mit einer hydrolysierbaren Gruppe der Strukturformel -SiRₐX₃₋ₐ und mit der wiederkehrenden Einheit 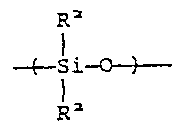 in der R² jeweils gleich oder verschieden sein kann und Alkyl oder Aryl ist; R Alkyl, mit Halogen substituiertes Alkyl oder mit Halogen substituiertes Aryl ist; X eine aus der aus Acyloxy, Alkoxy, Ketoxim, Amino, Amido und Alkenyl bestehenden Gruppe ausgewählte hydrolysierbare Gruppe ist und a 0 oder 1 ist; an mindestens einem Molekülende
(d) einem Photopolymerisationskatalysator, bei dem es sich um einen radikalbildenden Photopolymerisationskatalysator handelt, wenn die Komponente (a) ein Polysiloxan mit einer (Meth)acrylgruppe an mindestens einem Molekülende ist, oder um einen Oniumsalzphotopolymerisationskatalysator handelt, wenn die Komponente (a) ein Polysiloxan mit einer Glycidyl- oder einer Propenyloxysilylgruppe an mindestens einem Molekülende ist und
(e) einem Kondensationskatalysator.

2. Silikonzusammensetzung nach Anspruch 1, in der die Komponente (c) ein Polyorganosiloxan der Strukturformel 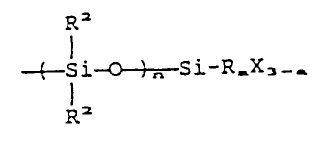 ist.

3. Silikonzusammensetzung nach Anspruch 1 oder 2, in der die Komponente (a) ein Polysiloxan mit einer (Meth)acrylgruppe an mindestens einem Mclekülende ist und die Komponente (d) ein aus der aus Acetophenon, Benzophenon, 4-Hydroxydiphenyl und 4-Nitroanilin bestehenden Gruppe ausgewählter radikalbildender Photopolymerisationskatalysator ist.

4. Silikonzusammensetzung nach Anspruch 1 oder 2, in der die Komponente (a) ein Polysiloxan mit einer Glycidyl- oder einer Propenyloxysilylgruppe an mindestens einem Molekülende ist und die Komponente (d) ein Oniumsalz eines Elements der Gruppe Va, VIa oder VIIa des Periodensystems der Elemente ist.

5. Silikonzusammensetzung nach einem der Ansprüche 1 bis 4, in der der Kondensationskatalysator aus der aus Metallsalzen von Organocarbonsäuren, organischen Titansäureestern, Organotitanverbindungen, Alkoxyaluminiumverbindungen, mit Aminoalkyl substituierten Alkoxysilanen, Aminverbindungen, Salzen von Aminverbindungen, niederen Fettsäuresalzen von Alkalimetallen, Dialkylhydroxylaminen, Guanidinverbindungen, eine Guanidylgruppe enthaltenden Silanen und eine Guanidylgruppe enthaltenden Siloxanen bestehenden Gruppe ausgewählt ist.

6. Silikonzusammensetzung nach einem der Ansprüche 1 bis 5, in der der Kondensationskatalysator in einer Konzentration von 0,01 bis 5 Gewichtsteilen, bezogen auf 100 Gewichtsteile der Komponente (b) verwendet wird.

## Revendications

1. Composition de silicone pour un joint liquide, qui peut à la fois être durcie par une radiation ultraviolette et par l'humidité, comprenant:
(a) 5 à 50% en poids d'un polysiloxane dont au moins une extrémité moléculaire porte un radical choisi dans le groupe consistant en (méth)-acryle, glycidyle et propényloxysilyle;
(b) un polyorganosiloxane ayant des groupes silanol à ses deux extrémités moléculaires;
(c) un polyorganosiloxane dont au moins une extrémité moléculaire porte un groupe hydrolysable ayant la formule structurale -SiRₐX₃-a et l'unité répétée : 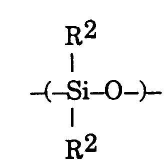 dans laquelle les R² sont identiques ou différents et sont des groupes alkyle ou aryle; R est un groupe alkyle, alkyle halo-substitué ou aryle halo-substitué; X est un groupe hydrolysable choisi dans le groupe consistant en groupes acyloxy, alcoxy, cétoxime, amino, amido et alcényle; et a est 0 ou 1;
(d) un catalyseur de photopolymérisation qui est un catalyseur de photopolymérisation formant un radical lorsque le composant (a) est un polysiloxane dont au moins une extrémité moléculaire porte un groupe (méth)acryle ou un catalyseur de photopolymérisation de type sel d'onium lorsque le composant (a) est un polysiloxane dont au moins une extrémité moléculaire porte un groupe glycidyle ou un groupe propényloxysilyle; et
(e) un catalyseur de condensation.

2. Composition de silicone suivant la revendication 1, dans laquelle le composant (c) est un polyorganosiloxane ayant la formule structurale:

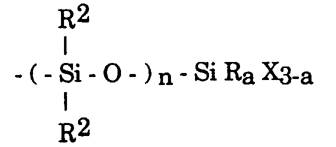

3. Composition de silicone suivant les revendications 1 ou 2, dans laquelle ce composant (a) est un polysiloxane dont au moins une extrémité moléculaire porte un groupe (méth)acryle et ce composant (d) est un catalyseur de photopolymérisation formant un radical choisi dans le groupe consistant en acétophénone, benzophénone, 4-hydroxydiphényle et 4-nitrcaniline.

4. Composition de silicone suivant les revendications 1 ou 2, dans laquelle ce composant (a) est un polysiloxane dont au moins une extrémité moléculaire porte un groupe glycidyle ou propényloxysilyle et ce composant (d) est un sel d'onium d'un élément des Groupes Va, VIa ou VIIa du tableau périodique des éléments.

5. Composition de silicone suivant l'une quelconque des revendications 1 à 4, dans laquelle ce catalyseur de condensation est choisi dans le groupe consistant en sels métalliques d'acides organocarboxyliques, esters organiques d'acide titanique, composés organiques du titane, composés alcoxyaluminiques, alcoxysilanes aminoalkyl-substitués, composés amino et leurs sels, sels d'acides gras inférieurs de métaux alcalins, dialkylhydroxylamines, composés de guanidine et silanes et siloxanes contenant un groupe guanidyle.

6. Composition de silicone suivant l'une quelconque des revendications 1 à 5, dans laquelle ce catalyseur de condensation est utilisé en une quantité de 0,01 à 5 parties en poids par rapport à 100 parties en poids du composant (b).
